# EUROPÄISCHE PATENTANMELDUNG

(11) **EP 2 110 237 A1**
(43) Veröffentlichungstag der Anmeldung: **21.10.2009**
(21) Anmeldenummer: 08103571.9
(22) Anmeldetag: 16.04.2008
(51) Int. Cl.: B32B 17/10, F21K 2/00, C09K 11/80, H01L 31/055

(54) **Photoluminiszierende Zwischenschichtfolien für Verbundverglasungen**

(71) Anmelder: Kuraray Europe GmbH, 65926 Frankfurt am Main (DE)
(72) Erfinder: Cengiz Ergün Dr., 51149 Köln (DE)
(74) Vertreter: Kisters, Michael Marcus

(57) **Zusammenfassung**

Die Erfindung betrifft Verbundglaslaminate mit luminiszierenden Zwischenschichtfolien z.b. zur Verwendung in Warntafeln, Hinweisschildern, Notbeleuchtungssystemen oder Photovoltaikmodulen.

## Beschreibung

### Technisches Gebiet

Die Erfindung betrifft die Herstellung und Verwendung von photoluminiszierenden Zwischenschichtfolien, sowie deren Verwendung in Verbundverglasungen oder Photovoltaikmodulen.

### Stand der Technik

Verbundverglasungen, d.h. Schichtkörper aus z.B. zwei Glasscheiben mit einer zwischengelegten Klebefolie, sind lange bekannt und werden z.B. als Windschutzscheibe für Kraftfahrzeuge oder im Architekturbereich eingesetzt.

Ebenso bekannt ist es, solche Verbundsysteme mit fluoreszierenden oder elektroluminiszierenden Stoffen auszustatten.

So beschreibt z.B. DE 43 24 167 A1 die Verwendung von fluoreszierenden Stoffen, d.h. optischen Aufhellern zur Verminderung der Gelbfärbung in Polyvinylbutyralfolien für Verbundverglasungen.

Weiterhin offenbart DE 10 350 529 A1 die Verwendung von fluoreszierenden anorganischen Pigmenten in Windschutzscheiben zur Herstellung von Head-up-Anzeigesystemen.

In diesen Anwendungen wird die Eigenschaft von fluoreszierenden Stoffen ausgenutzt, Licht zu absorbieren und sehr schnell wieder abzustrahlen.

In einem anderen technischen Gebiet werden elektroluminiszierende Stoffe zu Beleuchtungszwecken verwendet. Hierbei handelt es sich um Verbindungen, die bei Anlegen eines elektrischen Feldes Licht einer bestimmten Wellenlänge abgeben.

Nachteilig an diesen Systemen ist, dass der Leuchteffekt entweder nur sehr kurzzeitig nach Anregung (Fluoreszenz) oder nur in Verbindung mit einem von außen angelegten elektrischen Feld (Elektroluminiszenz) auftritt.

Es wurde gefunden, dass eine länger anhaltende Lichtemission von Zwischenschichtfolien durch Einsatz von photoluminiszierenden Verbindungen ermöglicht werden kann. Im Falle der bekannten fluoreszierenden Systeme wäre eine länger anhaltende Leuchtwirkung auch unerwünscht, da hiermit z.B. eine dynamische Informationsdarstellung praktisch verhindert wird.

Gegenstand der vorliegenden Erfindung sind daher polymerhaltige Zwischenschichtfolien zur Herstellung von Verbundverglasungen, mit Zusatz von einem oder mehreren photoluminiszierenden Stoffen.

Unter den Begriffen "Luminiszenz", "Photoluminiszenz" und "Phosphoreszenz" werden im Rahmen der vorliegenden Erfindung Eigenschaften von chemischen Verbindungen verstanden, durch Licht im IR-, NIR-, im sichtbaren oder UV-Bereich angeregt und diese Energie durch Licht gleicher oder längerer Wellenlänger wieder abzugeben. Die Strahlungsabgabe kann bei photoluminiszierenden Stoffen im Bereich von einer msec. bis zu mehreren Stunden dauern, wo hingegen die Strahlungsabgabe bei fluoreszierenden bzw. elektrofluoreszierenden Stoffen unter einer msec. liegt.

Photoluminiszierende Stoffe haben die folgenden Eigenschaften:
- Anregung durch Sonnen- oder künstliches Licht
- Hohe Luminiszenz während der ersten Stunde nach Anregung
- Lange Nachleuchtzeit, z.B. nach einem Abfall der Luminiszenz um den Faktor 100 ist diese durch das menschliche Auge (ca. 0.3 mcd/m²) auch nach mehreren Stunden noch detektierbar
- Das Emissionsspektrum entspricht der Empfindlichkeit des menschlichen Auges
- Hohe chemische Stabilität

Als photoluminiszierende Stoffe können anorganische oder organische Verbindungen eingesetzt werden. Photoluminiszierende Verbindungen sind dem Fachmann bekannt, besonders geeignet für den Einsatz in der vorliegenden Erfindung sind eine oder mehrer Verbindungen ausgewählt aus der Gruppe ZnS:Ag⁺, ZnS:Cu⁺, Zn2SiO₄:Mn²⁺, ZnS:Cu⁺, (Ca,Mg) SiO₃:Ce³⁺, Zn₂SiO₄Mn²⁺ + As³⁺, Gd₂O2S:Tb²⁺, Y₂O₂S:Tb²⁺, KMgF₃:Mn²⁺, ZnS:Ag⁺ + (Zn,Cd)S:Ag⁺, ZnS:Ag⁺ + (Zn, Cd)S:Cu⁺, ZnS:Ag⁺ + (Zn, Cd)S:Ag⁺, Zn₂SiO₄:Mn²⁺, (Ca,Mg)SiO₃:Ti⁴, Y₂O₃Eu^{3+ +} ZnS:Cu⁺, ZnS:Ag⁺, Y₂O₂:Eu³⁺, Y₂O₂SEu³⁺, ZnS:Cu⁺ + Zn₂SiO₄Mn²⁺, (Zn,Mg)F₂:Mn²⁺ + (Ca,Mg) SiO₃:Ce³⁺, ZnS:Ag⁺ + (Zn,Cd)S:Cu, (Zn,Cd)S:Cu⁺, Y₂Si₂O₅:Ce³⁺ + Tb³⁺, (Zn,Cd)S:Ag⁺, Ni²⁺ + Y₂O₂:Eu³⁺, YVO₄Eu³⁺ ZnS:Cu⁺, (Zu,Mg)F₂:Mn²⁺, (Ca,Mg)SiO₃:Ce³⁺, Zn₂SiO₄Mn²⁺ + As³⁺, CaWO₄, Gd₂O₂S:Tb³⁺, BaFCI:Eu²⁺, LaOBr : T^{b3}+, YTaO₄:Nb³⁺, Y₂O₅:Eu³⁺, Zn₂SiO₄Mn²⁺, CaWO₄:Pb²⁺, CaWO₄:Sm³⁺, 6 MgO As₂O₅:Mn⁴⁺, Y₂O₃Eu³⁺, 3 Sr₃(PO₄)₂ CaCI₂Eu²⁺, 3,5 MgO 0,5 MgF₂GeO₂:Mn⁴⁺, MgWO₄, Ba₂P₂O₇:Ti⁴⁺, Ce_{0,65}Tb_{0,35}MgAl₁₁O₁₉, CaSiO₃:Mn²⁺ + Pb^{2+,} ZnS:Ag, ZnS/CdS:Ag, ZnS/CdS:Ag , ZnS:Cu, Al, ZnS:Cu, Al, Y₂O₂S:Eu, Y₂O₃:Eu (rot leuchtend), YVO₄:Eu (rot), Zn₂SiO₄:Mn (grün), CaWO₄ (blau), (Zn, Mg) F₂:Mn (orange), MgSiO₃:Mn (rot), ZnO:Zn (blaugrün), CaWO₄ (blau), Gd₂O₂S:Tb (grün), Y₂O₂S:Tb (weißlich), La₂O₂S:Tb (grün), BaFCl:Eu (UV-C), LaOBr:Tb (blau). Mg-Wolframat (blau), (Zn,Be)-Silicat:Mn (gelb) u. evtl. Cd-Borat:Mn (rot). Halophosphat [Ca₁₀(PO₄)₆F, Cl:Sb, Mn], (SrMg)₂P₂O₇:Eu (UV-A), Sr₂P₂O₇:Sn (blau), Sr₄Al₁₄O₂₅:Eu (blaugrün), Y₂SiO₅:Ce, Tb (grün), Y(P,V)O₄:Eu (rot). BaMg₂Al₁₀O₂₇:Eu (blau), MgAl₁₁O₁₉:Ce, Tb (grün), Y₂O₃:Eu (rot).

Insbesondere geeignet sind anorganische Verbindungen der allgemeinen Formel MO xAl₂O₃ ySiO₂:Eu mit M = Ca, Mg, Sr, Ba; x = 0,8 bis 1,5 and y = 0,01 bis 1,0.

Durch die Verwendung von in der Polymermatrix löslichen, bevorzugt organischen photoluminiszierenden Verbindungen wie z.B. Perylengrün oder Bisazomethin-Pigmente wie Azomethinfluoreszenzgelb können praktisch transparente, aber dennoch photoluminiszierende Zwischenschichtfolien bzw. Verbundglaslaminate hergestellt werden.

Sind die photoluminiszierenden Stoffe in der Matrix nicht gelöst, sondern dispergiert, tritt eine gewisse Trübung der Folie bzw des Laminats auf. Die erfindungsgemäßen Folien können daher gegenüber Folien ohne Zusatz des luminiszierenden Materials eine verringerte Transparenz aufweisen. Bevorzugt beträgt die Transparenz von erfindungsgemäßen Folien bzw der damit hergestellten Glaslaminate mindestens 20 %, besonders bevorzugt mindestens 40 % und insbesondere mindestens 60 %.

In einer anderen Variante der Erfindung kann zur Herstellung von transparenten Folien bzw Laminaten die Teilchengrösse der photoluminiszierenden Stoffe so klein eingestellt werden, das keine oder nur eine geringe Wechselwirkung mit sichtbarem Licht auftritt. Geeignete Partikel der eingesetzten photoluminiszierenden Stoffe von haben eine Größe unter 50 nm, bevorzugt unter 30 nm.

Transparente Folien oder bzw. Verbundglaslaminate gemäß der Ewrfindung weisen bevorzugt eine Lichtdurchlässigkeit TL (380-780 nm) nach EN 410 von mehr als 80 oder 90%, bevorzugt mehr als 95 % auf und können in allen Anwendungen eingesetzt werden, bei denen es auf eine ausreichende optischen Transparenz ankommt, wie z.B. bei Verbundglasscheiben im Automobilbereich.

Die photoluminiszierenden Stoffe werden bevorzugt in einer Konzentration von 0,5 bis 80 Gew.%, bevorzugt 1 bis 60 Gew.%, insbesondere 2 bis 40 Gew.% bzw 2 bis 15 Gew.%, bezogen auf 100 Gew.- Teile des jeweiligen Polymers, eingesetzt.

Die erfindungsgemäßen Zwischenschichtfolien können bevorzugt auf weichmacherhaltigem Polyvinylacetal, Ethylen-Vinylacetat, weichmacherhaltigem Ethylen/Vinylalkohol/Vinylacetal-Copolymer oder Epoxygießharzen basieren. Die erfindungsgemäßen Zwischenschichtfolien enthalten in der Regel neben den Hauptbestandteilen Polymer und ggf. Weichmacher häufig auch noch Haftungsregulatoren, UV-Absorber oder Farbpigmente in einem untergeordneten Anteil.

Als geeignete polymere Materialien können erfindungsgemäß insbesondere weichmacherhaltige Polyvinylacetale eingesetzt werden.

Die weichmacherhaltiges Polyvinylacetal enthaltenden Folien enthalten bevorzugt unvernetztes Polyvinylbutyral (PVB), das durch Acetalisierung von Polyvinylalkohol mit Butyraldehyd gewonnen wird.

Der Einsatz von vernetzten Polyvinylacetalen, insbesondere vernetztem Polyvinylbutyral (PVB) ist ebenso möglich. Geeignete vernetzte Polyvinylacetale sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale) und WO 03/020776 A1 (mit Glyoxylsäure vernetzte Polyvinylacetale) beschrieben. Auf die Offenbarung dieser Patentanmeldungen wird vollumfänglich Bezug genommen.

Es ist auch möglich, die Acetalisierung mit anderen oder weiteren Aldehyden mit 5-10 Kohlenstoffatomen (z.B. wie Valeraldehyd) durchzuführen.

Als Polyvinylalkohol können im Rahmen der vorliegenden Erfindung auch Terpolymere aus hydrolysierten Vinylacetat/Ethylen-Copolymeren eingesetzt werden. Diese Verbindungen sind in der Regel zu mehr als 98% hydrolysiert und enthalten 1 bis 10 Gew. auf Ethylen basierende Einheiten (z.B. Typ "Exceval" der Kuraray Europe GmbH).

Polyvinylacetale enthalten neben den Acetaleinheiten noch aus Vinylacetat und Vinylalkohol resultierende Einheiten. Die erfindungsgemäß verwendeten Polyvinylacetale weisen bevorzugt einen Polyvinylalkoholanteil von weniger als 23 Gew.%, weniger als 21 Gew.%, weniger als 18 Gew.% oder insbesondere weniger als 16 Gew.% auf. Ein Polyvinylalkoholanteil von 12 Gew.% sollte nicht unterschritten werden.

Der Polyvinylacetatanteil liegt bevorzugt unter 5 Gew.%, bevorzugt unter 3 Gew.% und insbesondere unter 2 Gew.% Aus dem Polyvinylalkoholanteil und dem Restacetatgehalt kann der Acetalisierungsgrad rechnerisch ermittelt werden.

Bevorzugt weisen weichmacherhaltige erfindungsgemäße Folien einen Weichmachergehalt von 15 bis 40 Gew.%, besonders bevorzugt 20 bis 40 Gew.% und insbesondere von 20 bis 30 Gew.% auf. Erfindungsgemäße Folien können einen oder mehrere Weichmacher enthalten.

Besonders geeignet als Weichmacher für die erfindungsgemäßen Folien ist mindestens eine Verbindung aus der Gruppe Di-2-ethylhexylsebacat, Di-2-ethylhexyladipat (DOA), Di-2-ethylhexylphthalat (DOP), Dihexyladipat (DHA), Dibutylsebacat (DBS), Di-2-butoxyethylsebacat (DBES), Triethylenglykol-bis-2-ethylhexanoat (3G8), Triethylenglykol-bis-n-heptanoat 3G7 , Tetraethylenglykol-bis-n-heptanoat (4G7), Di-2-butoxyethyl-adipat (DBEA), Di-2-butoxyethoxyethyladipat (DBEEA). Diese Weichmacher können alleine oder als Mischung eingesetzt werden.

Das Haftungsvermögen von Polyvinylacetalfolien an Glas wird üblicherweise durch die Zugabe von Haftungsregulatoren wie z. B. die in WO 03/033583 A1 offenbarten Alkali- und/oder Erdalkalisalze von organischen Säuren eingestellt. Als besonders geeignet haben sich Kaliumacetat und/oder Magnesiumacetat herausgestellt. Zudem enthalten Polyvinylacetale aus dem Herstellungsprozess häufig Alkali-und/oder Erdalkalisalze von anorganischen Säuren, wie z.B. Natriumchlorid.

Der Einsatz von weichmacherhaltigen, auf Polyvinylacetal basierenden Folien mit weniger als 50 ppm, besonders bevorzugt mit weniger als 30 ppm und insbesondere mit weniger als 20 ppm der o.g. Metallionen ist besonders bevorzugt. Dies kann durch entsprechende Waschverfahren des Polyvinylacetals und durch die Verwendung besonders gut wirkender Antihaftmittel wie die dem Fachmann bekannten Magnesium-, Calzium- und/oder Zinksalze organischer Säuren (z.B. Acetate) erreicht werden. Metallionen der photoluminiszierenden Verbindungen sind in diesen Konzentrationen nicht enthalten.

Die prinzipielle Herstellung und Zusammensetzung von Folien auf Basis von Polyvinylacetalen ist z. B. in EP 185 863 B1, EP 1 118 258 B1 WO 02/102591 A1, EP 1 118 258 B1 oder EP 387 148 B1 beschrieben.

In einer besonderen Variante der Erfindung besteht die Zwischenschichtfolie aus mindestens einer Teilfolie mit und einer Teilfolie ohne den Zusatz von photoluminiszierenden Stoffen.

Die Herstellung der Mehrschichtfolien kann z.B. durch Zusammenlegen entsprechender Teilfolien oder aber durch Coextrusion der Teilschichten in einem Arbeitsgang erhalten werden. Die Gesamtdicke der erfindungsgemäßen Zwischenschichtfolien liegt bevorzugt beim industriell üblichen Maß von 0,38, 0,51, 0,76, 1,14, 1,52 oder 2,28 mm.

Bevorzugt weisen die Teilfolien bis auf die photoluminiszierenden Stoffe eine identische Zusammensetzung auf. Zweckmäßig ist hier die Anordnung von zwei Teilfolien, die keine photoluminiszierenden Stoffe enthalten, zwischen die eine Teilfolie mit luminiszierendem Zusatz gelegt oder coextrudiert wird. Hiermit wird über die Außenschichten ein gängiges Haftungsverhalten der Folie an z.B. Glas sichergestellt.

Bei Mehrschichtfolien beziehen sich die genannten Konzentrationen der photoluminiszierenden Materialien auf die Teilfolie(n), welche die des photoluminiszierenden Materialien enthalten.

Die erfindungsgemäßen Folien besitzen eine Strahlungsabgabe/Nachleuchtzeit von (visuell im Dunkeln bestimmt, nach ca. 5 min Beleuchtung der Folie mit einer Leuchtstoffröhre mit einer Lichtleistung von 300 W/m²) mindestens 1 min, mindestens 5 min, bevorzugt mindestens 15 min, insbesondere mindestens 30 min. Die Strahlungsabgabe/Nachleuchtzeit ist von der Konzentration der photoluminiszierenden Stoffe in der erfindungsgemäßen Folien abhängig und kann bei entsprechender Dosierung auch für 1, 2, 4, 6 oder sogar 10 Stunden visuell im Dunkeln beobachtet werden.

Durch entsprechende Auswahl der photoluminiszierenden Stoffe kann den erfindungsgemäßen Folien praktisch jede Farbe gegeben werden, z.B. weiß-transluzent, gelb, rot, blau, orange, rosa, grün, braun oder violett bzw. Mischfarben hiervon.

Weiterer Gegenstand der Erfindung sind Verbundlaminate aus mindestens einer transparenten Frontabdeckung mit einer optional transparenten rückwärtigen Abdeckung, mit einer zwischengelegten erfindungsgemäßen, luminiszierenden Zwischenfolie. Bevorzugt werden als Front- und rückwärtige Abdeckung Glasscheiben eingesetzt.

Erfindungsgemäße Zwischenschichtfolien können insbesondere zur Herstellung von Verbundglaslaminaten im Automobilbereich Verbundglaslaminaten im Architekturbereich, Warntafeln, Hinweisschildern, Notbeleuchtungssysteme oder Photovoltaikmodulen verwendet werden.

Darüber hinaus können erfindungsgemäße Zwischenschichtfolien im Automobilbereich verwendet werden. So können Front-, Heck- oder Schiebedach- oder Seitenscheiben von Flugzeugen, Autos, Bussen oder Campingmobilen aus Sicherheitsgründen mit erfindungsgemäßen Folien hergestellt werden.

In einer weiteren Variante der Erfindung können die Zwischenschichtfolien Teilbereiche mit Zusatz von photoluminiszierenden Stoffen und Teilbereiche ohne den Zusatz von photoluminiszierenden Stoffen aufweisen. So kann die Folie lediglich im Randbereich (ca. 1-10 cm, bevorzugt 1-5 cm vom Rand der Folie aus gemessen) photoluminiszierend ausgerüstet werden, insbesondere im Randbereich von Verbundglasscheiben im Automobilbereich, die zur Zeit als UV-Schutz mit einem schwarzen Siebdruck versehen werden. Der Randbereich kann vollständig (als Rahmen) oder nur an einer oder mehreren Seiten photoluminiszierend ausgerüstet werden.

### Beispiele

Es wurden 0,76 mm dicke Testfolien einer Zusammensetzung gemäß Tab. 1 durch Kalandrieren eines Dryblends aus PVB-Polymer, Weichmacher und einer photoluminiszierenden Verbindung ATM-2 der Firma Advanced Technology & Materials, Co. Ltd. mit der allgemeinen Formel MO xAl2O3 ySi02:Eu mit M = Ca, Mg, Sr, Ba; x = 0,8 bis 1,5 and y = 0,01 bis 1,0 hergestellt und zwischen zwei 2mm dicke Glascheiben "Planilux" im üblichen Autoklavenprozess laminiert.

Die Glaslaminate wurden ca. 5 minuten mit Leuchtstoffröhren mit einer Leuchtleistung von 300W/m2 bestrahlt. Der Luminiszenzeffekt wurde anschließend im Dunkeln visuell kontrolliert.

Die folgende Tabelle zeigt, dass die erfindungsgemäßen Zwischenschichtfolien auch nach Laminierung eine Strahlungsabgabe von mindestens 15 min besitzen. Verbundverglasungen dieser Art sind z.B. als Warntafel, Hinweisschild oder in Notbeleuchtungssystemen einsetzbar.

**Tabelle 1**

| | **Vergleichsversuch 1** | **B 1** | **B 2** | **B 3** |
|---|---|---|---|---|
| PVB-Polymer | 72,5 | 72,5 | 72,5 | 72,5 |
| Weichmacher 3G8 | 25 | 25 | 25 | 25 |
| Weichmacher DBEA | 2,5 | 2,5 | 2,5 | 2,5 |
| UV Absorber | 0,15 | 0,15 | 0,15 | 0,15 |
| photoluminiszierende Verbindung ATM-2 | 0 | 2,0 | 6,0 | 10 |
| photoluminiszierende Verbindung ATM-2 phr | 0 | 2,76 | 8,28 | 13,79 |
| | | | | |
| 0.76 mm Folienlage laminiert zwischen 2 x 2 mm Klarglas | | | | |
| Lichtdurchlässigkeit TL (380-780 nm) [%] Nach EN 410 | 95 | 83 | 71 | 60 |
| Strahlungsdauer/Nachleuchtzeit in [min] (visuell) | 0 | 15-20 | 35-45 | 60-70 |

Alle Angaben in Gew.-% auf 100 Teile PVB, sofern nicht anders angegeben. Die Transmission TL wurde gemäß EN410 an einer Verbundglasscheibe, bestehend aus 2x2mm Klarglas mit einer 0,76mm dicken Folie, bestimmt.

## Patentansprüche

1. Polymerhaltige Zwischenschichtfolie zur Herstellung von Verbundverglasungen, **gekennzeichnet durch** den Zusatz von einem oder mehreren photoluminiszierenden Stoffen.

2. Zwischenschichtfolien nach Anspruch 1, **dadurch gekennzeichnet, dass** als photoluminiszierende Stoffe anorganische Verbindungen eingesetzt werden.

3. Zwischenschichtfolien nach Anspruch 1, **dadurch gekennzeichnet, dass** als photoluminiszierende Stoffe organische Verbindungen eingesetzt werden.

4. Zwischenschichtfolien nach einem der Ansprüche 1 bis 3, **dadurch gekennzeichnet, dass** die Zwischenschichtfolie auf weichmacherhaltigem Polyvinylacetal, Ethylen-Vinylacetat, weichmacherhaltigem Ethylen/Vinylalkohol/Vinylacetal-Copolymer oder Epoxygießharzen basiert.

5. Zwischenschichtfolien nach einem der Ansprüche 1 bis 4, **dadurch gekennzeichnet, dass** die Zwischenschichtfolie aus mindestens einer Teilfolie mit und einer Teilfolie ohne den Zusatz von photoluminiszierenden Stoffen besteht.

6. Zwischenschichtfolien nach Anspruch 6, **dadurch gekennzeichnet, dass** die Teilfolien bis auf die photoluminiszierenden Stoffe eine identische Zusammensetzung aufweisen.

7. Zwischenschichtfolien nach einem der Ansprüche 1 bis 6, **dadurch gekennzeichnet, dass** die photoluminiszierenden Stoffe in einer Konzentration von 0,5 bis 80 Gew.%, bezogen auf 100 Gew. Teile Polymer, eingesetzt werden.

8. Zwischenschichtfolien nach einem der Ansprüche 1 bis 7, **dadurch gekennzeichnet, dass** die Zwischenschichtfolie Teilbereiche mit Zusatz von photoluminiszierenden Stoffen und Teilbereiche ohne den Zusatz von photoluminiszierenden Stoffen aufweist.

9. Verbundlaminat, aus mindestens einer transparenten Frontabdeckung mit einer optional transparenten rückwärtigen Abdeckung, mit einer zwischengelegten Zwischenfolie nach einem der Ansprüche 1 bis 8.

10. Verwendung der polymeren Zwischenschichtfolie nach einem der Ansprüche 1 bis 8 zur Herstellung von Verbundglaslaminaten im Automobilbereich Verbundglaslaminaten im Architekturbereich, Warntafeln, Hinweisschildern, Notbeleuchtungssysteme, Photovoltaikmodule oder in Front-, Heck-, Schiebedach-oder Seitenscheiben im Automobilbereich.
